Europäisches Patentamt

(19) European Patent Office   (11) Publication number: **0 324 193**

Office européen des brevets   **A1**

(12) **EUROPEAN PATENT APPLICATION**

(21) Application number: **88200040.9**   (51) Int. Cl.⁴: **G01N 27/22**

(22) Date of filing: **13.01.88**

(43) Date of publication of application:
**19.07.89 Bulletin 89/29**

(84) Designated Contracting States:
**AT BE CH DE FR GB IT LI LU NL SE**

(71) Applicant: **Yokogawa Electrofact B.V.**
**Radiumweg 30**
**NL-3812 RA Amersfoort(NL)**

(72) Inventor: **de Zoete, Marinus Cornelis**
**Gerardus**
**Graaf Janlaan 65**
**NL-3818 DX Amersfoort(NL)**
Inventor: **Strihavka, Ivo**
**Nieuwe Schans 80**
**NL-3751 BD Bunschoten Spakenburg(NL)**

(74) Representative: **de Wit, Gerard Frederik, Ir. et**
**al**
**Octrooi- en Merkenbureau De Wit B.V.**
**Breitnerlaan 146**
**NL-2596 HG Den Haag(NL)**

(54) **Method and device for contact-free measuring the conductivity of a medium, using a capacitive coupling.**

(57) Method and device for contact-free measuring the conductivity or the capacity of a body of a medium, wherewith the phase angle ( $\phi$ ) between the voltage over and the current through said medium body (a,b,c,d,e,g) is determined and from said determined phase angle ( $\phi$ ) and the frequency of the alternating voltage the conductivity or the capacity of the medium body is determined.

EP 0 324 193 A1

**Method and device for contact-free measuring the conductivity of a medium, using a capacitive coupling.**

The invention relates to a method and device for measuring the conductivity or capacity of a medium body, using a capacitive coupling to the said medium body.

The medium may be liquid or solid and a body may have any shape, such as a liquid body contained in a measuring ceel, a solid body or a web or tape.

Two main groups of methods and devices of this type are available.

The first one is inductive. This has the advantage to allow for relatively low frequencies, but has the disadvantage that rather bulky excitation windings are necessary and that in many instances a current path in the medium, for instance a liquid, has to form a closed loop, which requirement often leads to specially shaped vessels, which have at least a part passing through the axes of the windings and further a part connecting the ends of the first part.

The other type is capacitive. Herewith it is possible to adapt the impedance of the capacitances between a pair of electrodes and the medium to the impendance of the medium body between the electrodes.

Another solution exists in that a medium body with the electrodes is part of the frequency determining part of an oscillator. With an adjustment capacitor the resonnance frequency has to be found and from this frequency the resistance value of the liquid body can be derived.

Both latter methods involve the use of rather high frequencies of the order of 10 to 300 MHz.

Such high frequencies can give rise to disturbances of for instance wireless receivers, or even computers. Further the high frequency leads (for instance coaxial conductors) are expensive and relatively difficult to handle.

The above indicated known types of contact-free resistance measurement of a liquid are indicated in "ABC der Konductometrie" by F. Oehme and R. Bänninger, Polymetron AG at Hombrechtikon, Switzerland.

The purpose of the invention is to provide a method and device for contact-free measuring of a medium, which allows the use of frequencies in the range below 500 kHz and is simple and reliable.

The above aims are attained by providing a method according to claim 1 and a device according to claim 5.

With the invention a value of the phase angle is related to a frequency. This can simply be done by varying the frequency until a preset value of the phase angle is attained or by measuring the phase angle at a predetermined frequency, or in general by determining a frequency and the related phase angle.

A further advantage of the invention is, that the inverse of the frequency is approximately proportional to $tg\phi$ if $\phi$ is the phase angle.

With the invention it is easy to create a number of different measuring ranges by providing that a predetermined value of the phase angle or the frequency is set at different ones out of a plurality of predetermined values to shift the measuring range.

A device according to the invention is defined in claim 5.

Further elaborations are described in claim 6, 7 and 8.

A device of this type in which automatically the applied frequency is the frequency at which a predetermined phase angle occurs, is defined in claim 9.

In order to get rid of fail indications due to phase differences occurring in the connection of the input electrode to the related input of the phase detector and the connection between the input electrode to the other input of the phase detector, it may be provided that between the input electrode and the related input of the phase angle detector a reference path is mounted, having preferably a resistance, which approximately equals that of the medium body. Such a reference path has preferably no reactive component at the measuring frequency.

The invention in the following is elucidated on hand of the accompanying drawings in which:

Figure 1 is a scheme of a device according to the invention;

Figure 2 is a scheme of a somewhat more detailed embodiment of the invention;

Figure 3 is a time chart of voltages occuring in the device of figure 2; and

Figures 4, 5, 6, 7 and 8 schematically show a few of the many possibilities to realize a measuring device which is suitable to apply the invention.

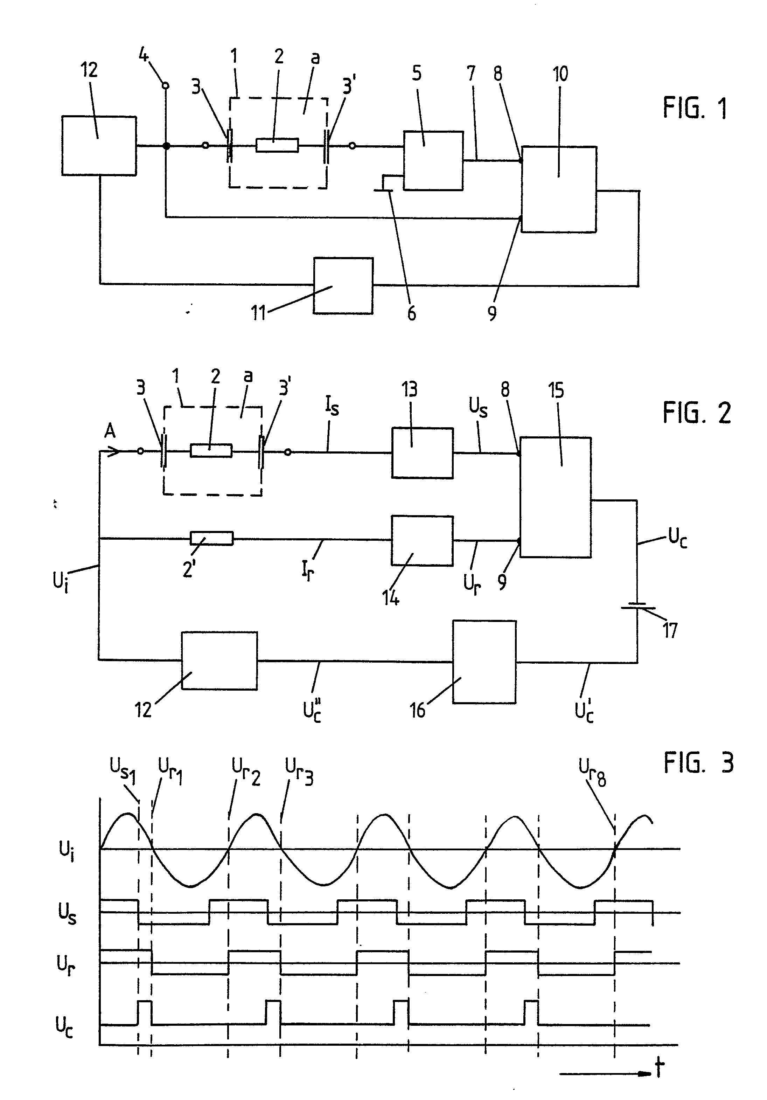

In fig. 1 reference 1 indicates a vessel containing a liquid a, the conductivity of which should be measured. The electrodes 3 and 3' at both sides of the resistor 2 indicate the capacities with which electrodes feed alternating current into the liquid through insulating parts of a limiting wall of the liquid body, the resistance value of which is indicated with resistor 2.

The output of the vessel 1 is fed to a current/voltage transducer 5, which may consist of a resistor and which has a current drain 6.

The output of the transducer 5 via a lead 7 is fed to one input 8 of a phase detector 10. The other input 9 of this detector is connected to the input electrode 3 of the vessel 1.

The output from the phase detector is a pulse voltage of which the mean value is a monotonic function of the phase angle between the signals on inputs 8 and 9. Optionally via a low pass filter 11, this output is connected to the voltage control input of a voltage controlled oscillator 12.

In the device of fig. 1 the frequency of the output signal of voltage controlled oscillator 12 is varied until equilibrium is reached of the voltage fed to the control terminal of 12 and the frequency of the output of 12 at which a phase angle occurs which generates the output voltage of the phase detector 10 to set the voltage controlled oscillator 12 on the right frequency. This frequency appears on terminal 4, which may be connected to an electronic device to determine the frequency. Then it is possible to determine the resistance value of the liquid body from the known impedance of the capacities and the said phase angle at the determined frequency.

In case the connection between phase angle detector 10 and voltage controlled oscillator 12 is interrupted or removed, it is possible to measure the output frequency of 12 and the output voltage of 10 from which the resistance value of 2 can be derived. When the other parameters of the system such as the lenght and the cross-section of the liquid body between the electrodes, the dielectric constant of the material of the wall parts opposite the electrodes and the effective surface area of the electrodes are known or their influence has been ascertained by using a standard solution of a known conductivity to evaluate measurements carried out with liquids to be measured, it is possible to deduct from this resistance value the conductivity of the liquid a.

In fig. 2 the vessel 1 and the voltage controlled oscillator 12 are of the same type as in fig. 1.

The output of vessel 1 is fed to a limiter 13, whereas the input of said vessel via a resistor 2' is connected to another limiter 14. Both limiters contain a current/voltage converter. The pulsed outputs of the limiters are connected to the said input 8 and the reset input 9 respectively of a set-reset flip-flop 15. The output of the flip-flop 15 is fed through filter 16, the DC output voltage of which if fed to the control input of oscillator 12. Preferably limiters 13 and 14 are identical and give in case of any phase rotation the same rotation each.

Fig. 3 shows graphs of the voltage occurring in the device of fig. 2.

$U_i$ is the output of oscillator 12 which has been shown with a rather important deviation from symmetry.

In the vessel 1 the phase of the current generated by this voltage $U_i$ is shifted to the left with respect to the phase of the voltage $U_i$, which fact has been indicated with the interrupted vertical line $U_{s1}$ indicating the first zero crossing of the voltage over the cell 1, which after squaring and limiting has the shape of $U_s$. The zero crossings of the input voltage $U_i$ are the same as those of the reference voltage $U_r$, indicated with the interrupted vertical lines $U_{r1}$, $U_{r2}$, $U_{r3}$ ............$U_{r8}$.

The zero crossings of the output of vessel 1 are repeated at always the same distance to the left of the zero crossings $U_{r1}$, $U_{r2}$ and so on. For clearity's sake only the first one of them has been shown and indicated with reference $U_{s1}$.

The output of limiter 13 has been shown in graph $U_s$ (sensor voltage). The limiting action of limiters 13 and 14 causes $U_s$ and $U_r$ to become a square wave with alsways the same hight above the zero-line.

The set- and reset flip-flop 15 is of the type that only responds to a negative going zero crossing excursion. This means that it is set at $U_{s1}$ and reset at $U_{r1}$.

The output of flip-flop 15 has been shown in graph $U_c$. The filtering action of filter 16 leads to a DC voltage $U_c''$, which is proportional to the phase shift between $U_s$ and $U_r$. This filtered voltage $U_c''$ is used as control voltage of oscillator 12, apart from the DC voltage source 17. Because 16 may be an active filter with an integrating function it is possible to vary $U_c''$ without permanent variation of $U_c$, which means that the phase shift may be kept constant.

A variation of the phase rotation in the current in the vessel 1 will lead to a variation in the phase difference between $U_s$ and $U_r$. This again causes variation of the pulse width of $U_c$, causing a variation of the filtered voltage $U_c''$, which leads to a frequency shift of oscillator 12. This frequency shift leads to a further variation of the phase difference between $U_s$ and $U_r$ and so on until equilibrium is reached. Knowledge of the phase angle at the frequency of $U_i$ and the effective current A enables to determine the reactive component of the AC current going through vessel 1, because a series connection of two capacitors of value C with a resistor between them is equivalent to a series connection of the same resistor and a capacitor of value C/2.

The reactive or capacitive component of the current through vessel 1 equals

$$A. \frac{1}{\omega C/2} / \sqrt{R^2 + \left(\frac{1}{\omega C/2}\right)^2}$$

in which $\omega = 2\pi f$, f being the frequency, whereas the resistive component

$$A.R/ \sqrt{R^2 + \left(\frac{1}{\omega C/2}\right)^2},$$

from which follows that

$$tg\ \varphi\ =\ \frac{1/\omega\ C/2}{R}.$$

With a known or predetermined value of, $\phi$ and consequently tg $\phi$ one has: R~1/f. If G is the conductance one has, R = 1/G so that G~f.

A frquency in the range below 500 kHz can easily be determined and $U_c$ is an immediate measure of the phase angle. The value of C normally varies with the temperature. These variations may be important if the dielectric constant of the wall part opposite the electrodes is dependent on temperature.

Because this constant is a known function of the temperature, a correction of the resistance value can be carried out easily if the temperature is monitored. The variation of the wall thickness of vessel 1 can be included in such a correction. When tg $\phi$ becomes very high ( $\phi$ near $\pi/2$) or very small ( $\phi$ near 0) the measurement of R becomes incorrect. In order to obviate this difficulty the voltage source 17 is used to shift the frequency toward a region in which tg $\phi$ has an acceptable value, preferably in the neighbourhood of 1 for instance between 0,2 and 5.

The voltage source 17 has been shown as a voltaic cell, but of course all other types of voltage sources may be used, such as a circuit containing a Zener diode or one or more operational amplifiers. For setting different measurement ranges source 17 may be suitable to be adjusted in very well defined steps. In that way a measurement can be carried out in a rather large range of resistance values of the liquid body in vessel 1. It is remarked that the resistivity of the liquid is directly proportional to the measured resistance value of the liquid body and that therefor for each type of vessel only once the relation between the resistivity of a liquid in the vessel and the resistance value of the liquid body has to be determined.

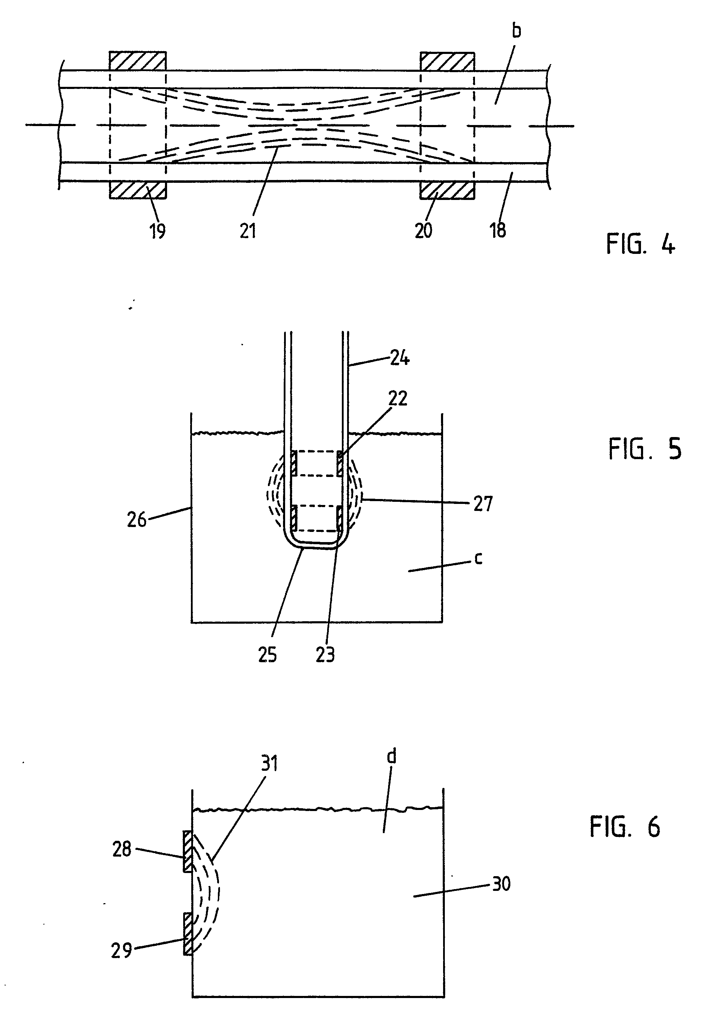

Fig. 4 shows a vessel in the shape of a tube 18 carrying a liquid b to be measured. Two ring shaped electrodes 19 and 20 are mounted to the outside of the tube. The current flow has been schematically indicated at 21.

Fig. 5 shows an embodiment in which two electrode rings 22 and 23 respectively are mounted to the inner side of a tube 24, which is closed at its end 25. A liquid c is contained in a container 26 and the liquid body is formed by the liquid surrounding tube 24. The current flow within the liquid body is referenced with 27.

Fig. 6 shows an embodiment, in which two electrodes 28 and 29 have been mounted to a plane wall of a vessel 30. Here the current flow in a liquid d is indicated at 31.

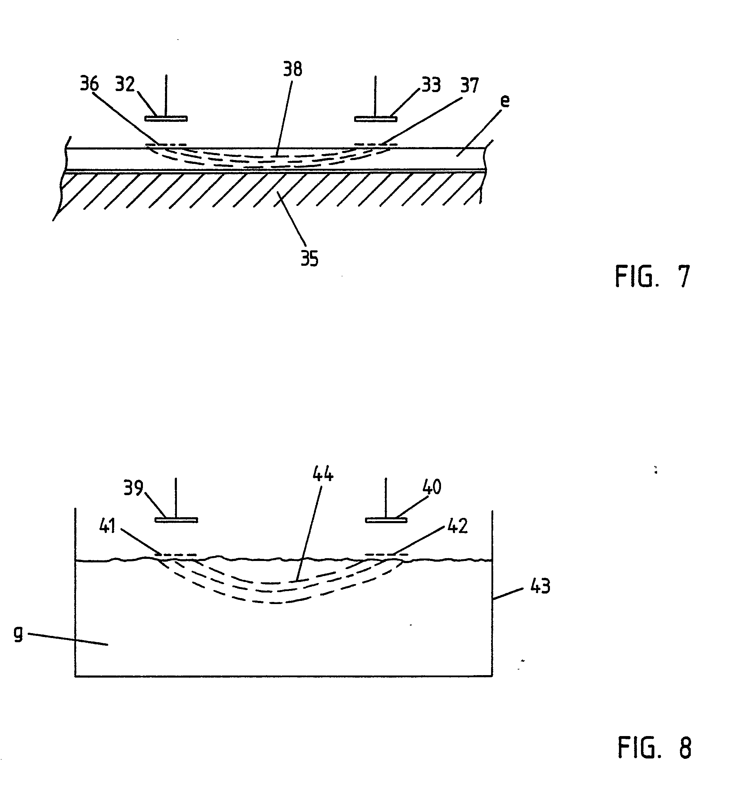

Fig. 7 shows an embodiment of the invention in which the medium body e is solid, for instance a web or tape of solid material, such as textile or paper. The web e is supported by a support means 35, which may be of any type to fix the position of the upper surface of web e with respect to the electrodes 32 and 33, which cooperate with the surface regions 36 and 37 respectively to capacitively feed current through web e. The space between the electrodes 32 and 33 on the one hand and the surface areas 36 and 37 of web e on the other hand may contain air or another gas or any liquid or solid dielectric material. In this embodiment the support means 35 is not restricted to a fixed plane support but may be of any type, for instance roller sets spaced from each other in the longitudinal direction of web e. The current flow has schematically been indicated at 38.

Fig. 8 shows an embodiment in which a vessel 43 contains a liquid g the free surface of which at the surface regions 41 and 42 cooperates with electrodes 39 and 40. Also in this embodiment the space between the electrodes 39 and 40 and the surface regions 41 and 42 may contain a gaseous, a liquid and/or a solid dielectric material. The current flow has been indicated with 44.

It is remarked, that the indicated current flows 21, 27, 31, 38 and 44 are only schematic. In fact such a field may be far more extended, but these extended parts are very weak.

Also it may be clear that electrodes such as 28 and 29 may be applied to different vessel walls.

In this specification a vessel intends to indicate a means to contain a liquid, which may be a container, a tube , a hose or such like.

It is remarked, that the capacitive connection to the medium body may be one-sidedly,which means that at one side of the body an ohmic contact is present and at the other a capacitive coupling.

Further it is remarked, that in the shown embodiments the conductivity of a body, mostly a liquid body, is measured. In case the capacity of for instance a layer of material has to be determined, to ascertain the dielectric constant or the thickness of such a layer, the capacitive connection is that between the layer and one or more electrodes located near said layer or contacting it and the body is replaced by a known resistor.

## Claims

1. Method for measuring the conductivity or the capacity of a body of a medium, which is capacitively connected in a measuring circuit, containing a source of alternating voltage(12) and means to deduce the conductivity or the capacity of said body by determining relevant electrical quantities, characterized in that said means contains a phase angle determining means (10,15) to determine the phase angle ( $\phi$ ) between the voltage over and the current through part of the circuit (1) containing said medium body and in that from the determined phase angle and the frequency of the alternating voltage the conductivity or the capacity of the medium body is determined.

2. Method according to claim 1 in which the frequency is varied until the phase angle ( $\phi$ ) has a predetermined value, after which the conductivity or the capacity is deduced from the frequency at the said predetermined value of the phase angle and the value of that angle.

3. Method according to claim 1, in which the phase angle ( $\phi$ ) is measured and the frequency is a predetermined one.

4. Method according to claim 2 or 3, in which the determined value of the phase angle or the frequency is set at different ones out of a plurality of predetermined values to shift the measuring range.

5. Device for applying the method of one or more of the preceding claims having a supporting means (1,18,26,30,35,43) for locating at least one surface area (18,24,30,36,41; 19,22,28,37,42) of a medium body (a,b,c,d,e,g), at least one input electrode (3,19,22,28,32,39) and one output electrode (3',20,23,29,33,40) opposite said surface areas respectively, an oscillator (12) connected in the circuit of said electrodes and means in said circuit to determine the conductivity or the capacity of the said medium body, characterized in that said means contain a phase detector means (10,15) to determine the phase angle ( $\phi$ ) between the voltages over and the currents through said electrodes.

6. Device according to claim 5, characterized in that said supporting means is a vessel (1), the said at least one surface area of the body being limited by a wall part (18, 24,30) of insulating material, one of said electrodes being located adjacent to or in contact with said wall part at the side thereof opposite said at least one surface area.

7. Device according to claim 5, characterized in that said supporting means is a vessel (43) allowing a free surface of a liquid (g), at least one of the input and output electrodes (39,40) being located opposite an area (41,42) of said free surface.

8. Device according to claim 5, characterized in that said supporting means (35) is adapted to support a solid body or web having at least one surface area (36,37) opposite an input electrode (32) or the output electrode (33).

9. Device according to any of the claims 5-8, characterized in that said phase detector means (10,15) has two inputs (8,9), one (9) of which receives the voltage applied to the input electrode and the other of which (8) is connected to the output of a transfer means (5) for deriving a voltage from a current, which transfer means has an input receiving the current passing through said medium body, the output of the phase detector means being a measure for the phase angle of the voltages applied to its inputs.

10. Device according to any of the claims 5-9, characterized in that the oscillator (12) is a voltage controlled oscillator and that the output of the phase detector means (10,15) is connected to a frequency control input of the voltage controlled oscillator.

11. Device according to claim 10, characterized in that a filter (11,16) is connected in the connection between the phase detector means (10,15) and the voltage controlled oscillator (12).

12. Device according to any of the preceding claims 5-11, characterized in that the input electrode (3,19,22,28,32,39) is connected to the input of a reference path (2') the output of which is connected to the phase detector means (15).

13. Device according to any of the claims 10-12, characterized in that an adjustable voltage source (17) is connected to add its voltage to the voltage delivered from the phase angle detector means (15) to the voltage controlled oscillator (12).

FIG. 1

FIG. 2

FIG. 3

FIG. 4

FIG. 5

FIG. 6

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 443 218 (H.T. JAGGERS et al.) * columns 1,2; figure 1 * | 1-4 | G 01 N 27/22 |
| Y | | 5-8 | |
| A | | 9 | |
| | --- | | |
| Y | DE-U-1 886 329 (K. SLEVOGT) * page 1 * | 5-8 | |
| | --- | | |
| A | US-A-3 408 566 (A. NORWICH) * abstract * | 1,5 | |
| | --- | | |
| A | US-A-3 778 707 (R.F. VOGEL) * column 1, line 61 - column 2, line 62 * | 1,5 | |
| | --- | | |
| T | GB-A-2 061 528 (COUNTING INSTRUMENTS LTD.) * page 1, lines 7-12; page 2, line 36 * | 1 | |
| | ----- | | |

TECHNICAL FIELDS SEARCHED (Int. Cl.4)

G 01 N 27/00
G 01 B 7/00
G 01 R 27/00

The present search report has been drawn up for all claims

| Place of search | Date of completion of the search | Examiner |
|---|---|---|
| BERLIN | 07-09-1988 | BRISON O.P. |